# EUROPÄISCHE PATENTANMELDUNG

(11) **EP 4 671 534 A1**
(43) Veröffentlichungstag der Anmeldung: **31.12.2025**
(21) Anmeldenummer: 25181115.4
(22) Anmeldetag: 05.06.2025
(51) Int. Cl.: F03D 13/10, B66C 13/08

(54) **HALTEVORRICHTUNG**

(30) Priorität: 27.06.2024 DE 202024001229 U
(71) Anmelder: SpanSet secutex Sicherheitstechnik GmbH, 52511 Geilenkirchen (DE)
(72) Erfinder: Franke, Boris, 52525 Heinsberg (DE)
(74) Vertreter: Taubert, Diana

(57) **Zusammenfassung**

Die Erfindung betrifft eine Haltevorrichtung in Form eines flächenhaften Gebildes, an dem ein Führungsseil in der Regel reversibel angeordnet oder anordenbar ist und die Haltevorrichtung die Merkmale gemäß Anspruch 1 aufweist.

## Beschreibung

Die Erfindung betrifft eine Haltevorrichtung in Form eines flächenhaften Gebildes, an dem ein Führungsseil in der Regel reversibel angeordnet oder anordenbar ist. Es handelt sich dabei um eine sogenannte Blattbandage.

Blattbandagen werden bei der Montage von Windraftanlagen zur Befestigung mindestens eines Führungsseils, so genannten Tag-Lines, an zu montierende Rotorblätter verwendet. Dabei werden die Blattbandagen mit ein oder mehreren Arretierelementen, in der Regel sind dies Zurrgurte, an einem Rotorblatt arretiert.

Haltevorrichtungen in Form von Blattbandagen sind in unterschiedlichen Gestaltungen bekannt, so aus der DE 20 2014 001 493 U1. Dabei wird die Haltevorrichtung um eine Last gelegt, sodass sie diese zumindest teilweise umschließt. Die Haltevorrichtung wird sodann in bekannter Weise arretiert, sodass sie funktionssicher an der Last anliegt. In aller Regel sind an der Haltevorrichtung zusätzlich Vorrichtungen, etwa Schlingen, angebracht, an welche eine Lastaufnahmevorrichtung angeordnet werden kann. Übliche Lastaufnahmevorrichtungen sind zum Beispiel ein Kranhaken, der sodann die Last mittels eines Kranes hebt oder beispielsweise ein Halteseil, eine so genannte Tag-Line, welche zum Justieren und Ausrichten der zu transportierenden Last dient und selbst bodenseitig an einer Seilwinde angebracht ist oder von einer Person gehalten wird. Sind Teile von Windkraftanlagen, so ein Rotorblatt, die Last, so wird das Rotorblatt durch einen Kran oder eine sonstige Hubvorrichtung in eine Solllage, also eine Montageposition, gebracht und an einer Nabe der Windkraftanlage montiert.

Ist dies abgeschlossen, ist die Haltevorrichtung, mit der das Rotorblatt zum Beispiel ausjustiert wurde, wieder von der Last zu entfernen, indem es in einem weiteren Arbeitsschritt händisch abgestreift wird oder indem Verschlusselemente der noch an der Last angeordneten Haltevorrichtung händisch gelöst werden und Selbiges sodann abfällt.

Das ist in der Regel kompliziert, weil die Haltevorrichtung regelmäßig schwer zu erreichen ist. Scheidet ein Erreichen aus, so ist es beispielsweise bei einem an einer Nabe der Windkraftanlage montierten Rotorblatt notwendig, dass die Nabe gedreht wird, sodass sich das waagerecht liegende Rotorblatt senkrecht stellt und dadurch die Haltevorrichtung mithilfe der Schwerkraft abrutschen kann. Dies ist aber nachteilig, weil so die noch im Bau befindliche Windkraftanlage, also die noch in Unwucht laufende Nabe, bewegt werden muss.

Bei der in der DE 20 2014 001 493 U1 offenbarten Haltevorrichtung hat sich gezeigt, dass eine Lösung des an der Haltevorrichtung in Form einer Blattbandage angeordneten Führungsseils bei Fehlbedienung leicht erfolgen kann. Es besteht keine Sicherung, die einer Fehlbetätigung entgegenwirkt. Für eine Fernentriegelung wurde vorgesehen, die dort offenbarte Haltevorrichtung in Form der Bandage mittels Verschlusselementen, dort bezeichnet als Halteelemente, beispielhaft lösbare Schäkel mit einem über eine Reißleine fernlösbaren Bolzen, zu öffnen, damit sich die Bandage von dem Rotorblatt löst und dieses freigibt.

Als nachteilig hat sich gezeigt, dass die Verschlusselemente in Form der lösbaren Schäkel über keine zusätzliche Sicherung verfügten. Sofern sich, wie dargelegt, ein Führungsseil verfängt oder irrtümlich bedient wird, löst sich direkt die Blattbandage und das Rotorblatt kann nicht mehr mittels des Führungsseils geführt werden. Ist dies der Fall, kann das Rotorblatt nicht mehr zuverlässig kontrolliert und montiert werden.

Die Aufgabe der Erfindung besteht darin, die Nachteile des Standes der Technik zu beseitigen und eine Haltevorrichtung bereitzustellen, bei welcher die Gefahr des Lösens des Führungsseils durch Fehlbedienung reduziert ist.

Diese Aufgabe wird erfindungsgemäß durch eine Haltevorrichtung nach Anspruch 1 gelöst, wobei die Unteransprüche weitere erfindungsgemäße Ausgestaltungsvarianten dieser Lösungen beinhalten.

Danach besitzt eine Haltevorrichtung die Form eines flächenhaften Gebildes, wobei die Haltevorrichtung mindestens ein Führungsseil aufweist, beziehungsweise an die Haltevorrichtung mindestens ein Führungsseil anordenbar ist. Die Haltevorrichtung dient zur Anordnung an einer Last, so an ein Rotorblatt, wobei die Haltevorrichtung die Last ganz oder teilweises umschließen kann, so einen Abschnitt des Rotorblatts. Ferner weist die Haltevorrichtung mindestens ein Arretierelement, so beispielhaft mindestens einen Spanngurt, zur funktionssicheren Anordnung der Haltevorrichtung an der Last auf. Das mindestens eine Arretierelement weist ein Verschlusselement auf und das Verschlusselement besitzt einen Öffnungsmechanismus, der mittels des mindestens einen Führungsseils oder mittels eines weiteren Führungsseils öffenbar ist.

Erfindungsgemäß steht das mindestens eine Führungsseil oder das weitere Führungsseil, das auch als optionales Sicherungsseil vorgesehen werden kann, das nur dazu dient, den Öffnungsmechanismus zu bedienen, in Wirkverbindung mit einer Sicherungsvorrichtung, zum Beispiel, aber nicht erfindungsnotwendig, ein Gurtband mit einem weiteren vorbeschriebenen lösbaren Schäkel, welche eine Betätigung des Verschlusselements durch das mindestens eine Führungsseil oder das weitere Führungsseil verhindert, solange die Wirkverbindung mit dem mindestens einen Führungsseil oder dem weiteren Führungsseil besteht.

Die Wirkverbindung der Sicherungsvorrichtung mit dem mindestens einen Führungsseil oder dem weiteren Führungsseil weist dabei einen gleichen oder höheren, beispielhaft mechanischen, Öffnungswiderstand auf als das Verschlusselement. In Betracht kommt eine Zug- oder Druckbeaufschlagung. In vorzugsweiser Ausgestaltung der Erfindung ist der Öffnungswiderstand höher. Das bedeutet, dass erst bei einer definierten Krafteinwirkung, so einer definierten Zug- oder Druckbeaufschlagung, die Sicherungsvorrichtung sich bei Betätigung zum Beispiel durch das mindestens eine Führungsseil oder das weitere Führungsseil öffnet und damit der Öffnungswiderstand überwunden wird. Erst danach kann sich das Verschlusselement öffnen, wenn, zum Beispiel durch das mindestens eine Führungsseil oder das weitere Führungsseil, der Öffnungsmechanismus des Verschlusselements bedient wird und ebenfalls der Öffnungswiderstand des Verschlusselements überwunden wird, der aber geringer sein kann als der Öffnungswiderstand der Sicherungsvorrichtung.

Als Verschlusselement im Sinne der Erfindung sind sowohl ein, als auch mehrere Verschlusselemente zu verstehen.

Der Öffnungsmechanismus des Verschlusselements und die Wirkverbindung der Sicherungsvorrichtung können dabei nicht nur unmittelbar mittels des mindestens einen Führungsseils oder des weiteren Führungsseils bedient werden, sondern es kommen auch andere Steuerungen mittels des mindestens einen Führungsseils oder des weiteren Führungsseils in Betracht, so zum Beispiel eine mittelbare elektronische oder elektromechanische oder hydraulische Steuerung, die bei Bedienung des mindestens einen Führungsseils oder des weiteren Führungsseils aktiviert wird.

In einer Ausführungsform ist, wie erläutert, der Öffnungsmechanismus des Verschlusselements und die Wirkverbindung der Sicherungsvorrichtung mittels des mindestens einen Führungsseils oder des weiteren Führungsseils bedienbar, wenn das mindestens eine Führungsseil oder das weitere Führungsseil mit Zugkraft beaufschlagt wird. Dabei ist die Zugkraftbeaufschlagung zur Lösung der Wirkverbindung der Sicherungsvorrichtung mit dem mindestens einen Führungsseil oder dem weiteren Führungsseil gleich oder größer als die Zugkraftbeaufschlagung des Öffnungsmechanismus des Verschlusselements.

Die Sicherungsvorrichtung kann unterschiedlich ausgestaltet sein. So kann diese beispielhaft zerstörbar ausgestaltet sein, was durch ein aufreißbares textiles Flächengebilde, so ein aufreißbares Gurtband oder eine aufreißbare Schlaufe gewährbar ist.

Ebenfalls kommt in Betracht, dass die Sicherungsvorrichtung ein lösbarer Schäkel, beispielhaft in Form eines Schnappschäkels ist. Dabei kann die Wirkverbindung der Sicherungsvorrichtung mit dem mindestens einen Führungsseil oder dem weiteren Führungsseil über ein Gurtband oder eine Schlaufe gewährleistet sein.

Des Weiteren kann die Sicherungsvorrichtung als ein regulierbares Federelement ausgestaltet sein, das einer Bedienung des mindestens einen Führungsseils oder des weiteren Führungsseils entgegenwirkt, wobei eine Einstellbarkeit des Öffnungswiderstands der Wirkverbindung der Sicherungsvorrichtung gegeben ist.

Darüber hinaus, kann die Sicherungsvorrichtung eine elastisch oder plastisch verformbare und öffenbare, zum Beispiel aufreißbare, Sicherungsschlinge sein, die einer Bedienung des mindestens einen Führungsseils oder des weiteren Führungsseils entgegenwirkt, bis diese aufreißt.

Durch die erfindungsgemäße Haltevorrichtung ist die Gefahr des Lösens des mindestens einen Führungsseils oder des weiteren Führungsseils durch Fehlbedienung reduziert. Es ist möglich, mittels der Sicherungsvorrichtung die Öffnung der Haltevorrichtung besser zu steuern und somit einen Transportvorgang der Last, der einen Montagevorgang einschließen kann, sicherer zu gestalten.

Die Erfindung wird nachfolgend anhand eines Ausführungsbeispiels unter Bezugnahme auf die Figur näher erläutert. Dabei ergeben sich weitere Vorteile, Merkmale und Ausgestaltungen der Erfindung.

Es zeigen:

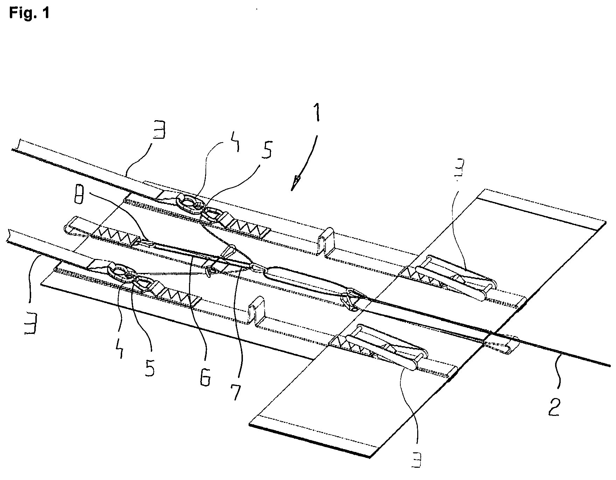

**Fig. 1** eine Haltevorrichtung in planer Darstellung nicht um ein Rotorblatt gelegt mit einem an diesem angeordneten Führungsseil

Die Haltevorrichtung **1** gemäß **Fig. 1** ist nicht an einer Last angeordnet. Sie ist ausgelegt und ihre Innenseite mit zwei Arretierelementen **3,** zwei Verschlusselementen **4** mit ihrem jeweiligen Öffnungsmechanismus **5** und der Sicherungsvorrichtung **6** sind sichtbar.

Die Haltevorrichtung **1** besitzt die Form eines flächenhaften Gebildes. An ihr ist ein Führungsseil **2** angeordnet, das gleichzeitig als Sicherungsseil fungiert. Das Führungsseil **2** kann von der Haltevorrichtung 1 abnehmbar ausgebildet sein. So können beide Teile separat gelagert und/oder transportiert werden. Ferner weist die Haltevorrichtung **1** zwei parallel zueinander verschobene angeordnete Arretierelemente **3,** im Ausführungsbeispiel zwei Spanngurte, zur funktionssicheren Anordnung der Haltevorrichtung **1** an einer Last auf. Jedes der beiden Arretierelemente **3** weist jeweils ein Verschlusselement **4** auf, das einen Öffnungsmechanismus **5** besitzt, der mittels des Führungsseils **2** öffenbar ist.

An dem Führungsseil **2** ist erfindungsgemäß eine Sicherungsvorrichtung **6** angebracht und das Führungsseil **2** steht in Wirkverbindung mit der Sicherungsvorrichtung **6,** die im Ausführungsbeispiel ein Gurtband **7** mit einem Schnappschäkel **8** ist, welche eine Betätigung der Verschlusselemente **4** durch das Führungsseil **2** verhindert, solange die Wirkverbindung der Sicherungsvorrichtung **6** mit dem mindestens einen Führungsseil **2** besteht. Das Gurtband **7** ist mit dem Schnappschäkel **8** verbunden. Der Schnappschäkel **8** ist an der Haltevorrichtung **1** angebracht.

Die Wirkverbindung der Sicherungsvorrichtung **6** mit dem Führungsseil **2** weist dabei einen höheren mechanischen Öffnungswiderstand auf als der Öffnungswiderstand der Verschlusselemente **4.** Wird an dem Führungsseil **2** gezogen und es somit mit einer Zugkraft beaufschlagt, muss zuerst der höhere Öffnungswiderstand der Sicherungsvorrichtung **6** überwunden werden, bis sich die Sicherungsvorrichtung **6** mittels des Schnappschäkels **8** öffnet. Sodann kann durch abermalige oder fortgesetzte Bedienung des Führungsseils **2** der Öffnungswiderstand der Verschlusselemente **4** überwunden werden und der Öffnungsmechanismus **5** der Verschlusselemente **4** löst die Arretierelemente **3,** sodass die Haltevorrichtung **1** sich von der Last lösen lässt, so wenn das Führungsseil **2** weiter mit Zugkraft beaufschlagt und die Haltevorrichtung **1** von der Last weggezogen wird oder sich die gesicherte Last relativ zur Haltevorrichtung **1** räumlich entfernt.

### Bezugszeichenliste

1. Haltevorrichtung
2. Führungsseil
3. Arretierelement
4. Verschlusselement
5. Öffnungsmechanismus
6. Sicherungsvorrichtung
7. Gurtband
8. Schnappschäkel

## Patentansprüche

1. Haltevorrichtung (1) in Form eines flächenhaften Gebildes mit mindestens einem Führungsseil (2),
- mindestens einem Arretierelement (3) zur funktionssicheren Anordnung der Haltevorrichtung (1) an einer Last,
- das mindestens eine Arretierelement (3) ein Verschlusselement (4) aufweist,
- das Verschlusselement (4) einen Öffnungsmechanismus (5) aufweist, der mittels des mindestens einen Führungsseils (2) oder mittels eines weiteren Führungsseils öffenbar ist, **dadurch gekennzeichnet, dass** das mindestens eine Führungsseil (2) oder das weitere Führungsseil in Wirkverbindung mit einer Sicherungsvorrichtung (6) steht, welche eine Betätigung des Verschlusselements (4) durch das mindestens eine Führungsseil (2) oder das weitere Führungsseil verhindert, solange die Wirkverbindung mit dem mindestens einen Führungsseil (2) oder mit dem weiteren Führungsseil besteht.

2. Haltevorrichtung (1) nach Anspruch 1, wobei die Wirkverbindung der Sicherungsvorrichtung (6) mit dem mindestens einen Führungsseil (2) oder dem weiteren Führungsseil einen gleichen oder höheren Öffnungswiderstand aufweist als das Verschlusselement (4).

3. Haltevorrichtung (1) nach einem der Ansprüche 1 oder 2, wobei der Öffnungsmechanismus (5) des Verschlusselements (4) und die Wirkverbindung der Sicherungsvorrichtung (6) mittels des mindestens einen Führungsseils (2) oder des weiteren Führungsseils öffenbar ist, wenn das mindestens eine Führungsseil (2) oder das weitere Führungsseil mit Zugkraft beaufschlagt wird.

4. Haltevorrichtung (1) nach Anspruch 3, wobei die Zugkraftbeaufschlagung zur Lösung der Wirkverbindung der Sicherungsvorrichtung (6) mit dem mindestens einen Führungsseil (2) oder dem weiteren Führungsseil gleich oder größer ist als die Zugkraftbeaufschlagung des Öffnungsmechanismus (5) des Verschlusselements (4).

5. Haltevorrichtung (1) nach einem der vorherigen Ansprüche, wobei die Sicherungsvorrichtung (6) zerstörbar ausgestaltet ist.

6. Haltevorrichtung (1) nach einem der vorherigen Ansprüche, wobei die Sicherungsvorrichtung (6) ein lösbarer Schäkel ist.

7. Haltevorrichtung (1) nach einem der vorherigen Ansprüche, wobei die Sicherungsvorrichtung (6) ein Federelement ist, das einer Bedienung des mindestens einen Führungsseils (2) oder des weiteren Führungsseils entgegenwirkt.

8. Haltevorrichtung (1) nach einem der vorherigen Ansprüche, wobei die Sicherungsvorrichtung (6) eine elastisch oder plastisch verformbare und öffenbare Sicherungsschlinge ist, die einer Bedienung des mindestens einen Führungsseils (2) oder des weiteren Führungsseils entgegenwirkt.

9. Verfahren zur Handhabung einer Haltevorrichtung (1) gemäß einer der Ansprüche 1 bis 8, **dadurch gekennzeichnet, dass**
- zuerst an dem Führungsseil (2) gezogen wird und es somit mit einer Zugkraft beaufschlagt wird, wobei zuerst der höhere Öffnungswiderstand der Sicherungsvorrichtung (6) überwunden wird, bis sich die Sicherungsvorrichtung (6) mittels des Schnappschäkels (8) öffnet,
- sodann durch abermalige oder fortgesetzte Bedienung des Führungsseils (2) der Öffnungswiderstand der Verschlusselemente (4) überwunden wird und der Öffnungsmechanismus (5) der Verschlusselemente (4) die Arretierelemente (3) löst, sodass die Haltevorrichtung (1) sich von der Last lösen lässt, wenn das Führungsseil (2) weiter mit Zugkraft beaufschlagt und die Haltevorrichtung (1) von der Last weggezogen wird oder sich die gesicherte Last relativ zur Haltevorrichtung (1) räumlich entfernt.
